# EUROPÄISCHE PATENTSCHRIFT

(11) **EP 3 283 357 B1**
(45) Veröffentlichungstag und Bekanntmachung des Hinweises auf die Patenterteilung: **06.03.2019**
(21) Anmeldenummer: 17735505.4
(22) Anmeldetag: 04.07.2017
(51) Int. Cl.: B62D 49/06

(54) **KIT, UMFASSEND EIN STELZENFAHRZEUG UND EINEN DESSEN TRANSPORT DIENENDEN ANHÄNGER**
KIT COMPRISING A STILT VEHICLE AND A TRAILER FOR TRANSPORTING SAME
ENSEMBLE COMPORTANT UN VÉHICULE ENJAMBEUR ET UNE REMORQUE SERVANT À SON TRANSPORT

(30) Priorität: 05.07.2016 DE 102016112292
(43) Veröffentlichungstag der Anmeldung: 21.02.2018
(73) Patentinhaber: BIOCARE Gesellschaft für biologische Schutzmittel mbH, 37574 Einbeck (DE)
(72) Erfinder: BEITZEN-HEINEKE, Wilhelm, 37574 Einbeck (DE); SCHMIDT, Stephan, 39175 Biederitz (DE); SCHÜNEMANN, Martin, 39114 Magdeburg (DE); HEIDFELD, Hannes, 39108 Magdeburg (DE); HINZELMAN, Ralf, 39108 Magdeburg (DE)
(74) Vertreter: Grättinger Möhring von Poschinger Patentanwälte Partnerschaft
(86) Internationale Anmeldenummer: PCT/EP2017/066655
(87) Internationale Veröffentlichungsnummer: WO 2018/007395

(56) Entgegenhaltungen:
- US-A- 5 039 129
- US-A1- 2002 053 795
- US-A1- 2015 102 593

## Beschreibung

Die vorliegende Erfindung betrifft ein Kit, umfassend ein selbstfahrendes zweispuriges Stelzenfahrzeug, insbesondere für land- und forstwirtschaftliche Anwendungen, und einen dem Transport des Stelzenfahrzeugs dienenden, eine Ladefläche aufweisenden Anhänger. Insbesondere betrifft die vorliegende Erfindung ein solches Kit gemäß dem Oberbegriff des Anspruchs 1. Selbstfahrende zweispurige Stelzenfahrzeuge mit einer vier Räder aufweisenden Fahr- und Tragstruktur sind insbesondere im Bereich von land-, garten- und forstwirtschaftlichen Anwendungen (einschließlich Weinbau) im Einsatz. Aufgrund ihrer Bauweise sind sie geeignet, land-, garten- und forstwirtschaftliche Kulturen mit in Reihen angebauten Pflanzen (begrenzter Wuchshöhe) zu befahren, wobei sich zwischen den beiden Spuren mindestens eine Pflanzenreihe befindet. Typischerweise kommen solche selbstfahrenden zweispurigen Stelzenfahrzeuge dabei bei der Pflege der Kultur (einschließlich Düngung und Schädlingsbekämpfung) sowie der Ernte zum Einsatz. Die FR 2550049 A1, die US 2015/0034736 A1 und die EP 2448808, sowie US 2002/053795 offenbaren beispielhaft verschiedene bekannte selbstfahrende zweispurige Stelzenfahrzeuge.

Wenngleich die an solche selbstfahrenden zweispurigen Stelzenfahrzeuge gestellten Anforderungen im Detail von Anwendungsfall zu Anwendungsfall variieren, so gilt doch generell, dass das Stelzenfahrzeug (trotz des vergleichsweise hohen Schwerpunkts) eine hohe, das sichere Befahren auch von unebenem bzw. geneigtem Gelände erlaubende Kippstabilität aufweisen, wendig sein, über eine hinreichende, beispielsweise auch für das Befahren von erheblichen Steigungen ermöglichende effektive Antriebsleistung verfügen und einen möglichst geringen Bodendruck verursachen sollte, und das bei möglichst geringen Kosten für den jeweiligen Einsatz. Ersichtlich stehen allerdings bereits einige dieser Zielsetzungen in einem Zielkonflikt zueinander, was es schwer macht, ein optimales Stelzenfahrzeug der hier in Rede stehenden Art bereitzustellen.

Für den praktischen Einsatz wichtige Aspekte mit Auswirkungen auf die Effizienz und den Nutzen betreffen dabei aber nicht nur den Aufbau des Stelzenfahrzeugs selbst. Von wesentlichem Einfluss auf den wirtschaftlichen Einsatz von Stelzenfahrzeugen ist auch deren Transport zum Einsatzort bzw. zwischen zwei Einsatzorten. Ein solcher Überführungs-Transport ist günstigenfalls auf einem Anhänger möglich. Ein gattungsgemäßes Kit, das ein selbstfahrendes zweispuriges Stelzenfahrzeug und einen zu dessen Transport geeigneten, eine Ladefläche aufweisenden Anhänger umfasst, ist beispielsweise aus der US 2011/0073026 A1 bekannt. Bei dem Anhänger lässt sich dabei die Spurweite dergestalt verändern, dass seine Räder zum Be- und Entladen des Stelzenfahrzeugs seitwärts nach außen verfahren werden. Ist das Stelzenfahrzeug auf der Ladefläche des Anhängers abgestellt, so werden die Räder des Anhängers seitwärts nach innen, in Richtung auf die Mitte zurück verfahren in eine Position zwischen den Vorder- und den Hinterrädern des Stelzenfahrzeugs.

Insoweit, als das der US 2002/0053795 A1 entnehmbare Stelzenfahrzeug - wie andere Fahrzeuge auch - auf einen geeigneten Anhänger transportiert werden kann, offenbart auch die US 2002/0053795 A1 ein Kit der gattungsgemäßen Art, bei dem die Fahr- und Tragstruktur des auf einem Anhänger transportierbaren Stelzenfahrzeugs, wie im Oberbegriff des Anspruchs 1 im Einzelnen angegeben, teleskopisch längenveränderbare Traversen und endseitig daran angeordnete, ihrerseits teleskopisch längenveränderbare Stelzenstrukturen mit daran angeordneten Radträgereinheiten umfasst. Wie im Falle der US 2011/0073026 A1 sind für die Veränderung der Spurbreite Verstellantriebe vorgesehen.

Im Lichte des vorstehend dargelegten Standes der Technik liegt der vorliegenden Erfindung die Aufgabe zugrunde, ein ein Stelzenfahrzeug und einen dessen Transport dienenden Anhänger umfassendes Kit der eingangs genannten Art bereitzustellen, das sich im Hinblick auf diverse übliche Anwendungen durch eine besonders hohe Praxistauglichkeit auszeichnet. Insbesondere soll sich das bereitzustellende Kit aus selbstfahrendem zweispurigen Stelzenfahrzeug und Transportanhänger für den besonders wirtschaftlichen Einsatz im Bereich der biologischen Schädlingsbekämpfung auf landwirtschaftlichen Kulturen eignen.

Gelöst wird die vorliegende Aufgabenstellung gemäß der vorliegenden Erfindung durch das in Anspruch 1 angegebene, ein selbstfahrendes zweispuriges Stelzenfahrzeug, insbesondere für land- und forstwirtschaftliche Anwendungen, und einen dem Transport des Stelzenfahrzeugs dienenden, eine Ladefläche aufweisenden Anhänger umfassende Kit. Dieses zeichnet sich somit durch die nachstehenden, synergetisch funktional zusammenwirkenden Merkmale aus:
Das Stelzenfahrzeug umfasst eine vier Räder aufweisende Fahr- und Tragstruktur mit einer quer zur Fahrtrichtung orientierten vorderen Traversenstruktur und einer quer zur Fahrtrichtung orientierten hinteren Traversenstruktur. Beidseitig endseitig an der vorderen Traversenstruktur sind zwei vordere Stelzenstrukturen und beidseitig endseitig an der hinteren Traversenstruktur sind zwei hintere Stelzenstrukturen angeordnet. An den Stelzenstrukturen sind jeweils mindestens ein Rad tragende Radträgereinheiten angeordnet. Die vordere und die hintere Traversenstruktur sind jeweils mehrteilig aufgebaut mit einem Mittelstück und einem an diesem in verschiedenen Breitenpositionen fixierbaren linken und rechten Endstück, mit welchen die jeweils zugeordnete Stelzenstruktur verbunden ist. Die Stelzenstrukturen sind jeweils mehrteilig aufgebaut mit einem mit dem zugeordneten Endstück der betreffenden Traversenstruktur verbundenen Primärteil und einem an diesem in verschiedenen Höhenpositionen fixierbaren, an welchem die zugeordnete Radträgereinheit angeordnet ist. Es sind keine eine Positionsveränderung der Sekundärteile und der Primärteile der Stelzenstrukturen des Stelzenfahrzeugs zueinander bewirkende Verstellantriebe vorgesehen. Es ist eine an zentralen Elementen der Fahr- und Tragstruktur des Stelzenfahrzeugs angreifende, sich auf dem Anhänger abstützende Hubeinrichtung vorgesehen.

Eines der die Fahr- und Tragstruktur des erfindungsgemäßen Stelzenfahrzeugs auszeichnenden Charakteristika von besonderer Bedeutung besteht demgemäß in der spezifischen Ausführung einer jeweils quer zur Fahrtrichtung orientieren vorderen und hinteren Traversenstruktur dergestalt, dass sie jeweils mehrteilig aufgebaut ist mit einem Mittelstück und zwei an diesem in verschiedenen Breitenpositionen fixierbaren Endstücken, mit welchen eine jeweils zugeordnete Stelzenstruktur verbunden ist. Die auf diese Weise mögliche Veränderung der Spurweite mit geringem Aufwand (s. u.) gestattet es, ein Stelzenfahrzeug, das für seinen sicheren Einsatz im geneigten Gelände - im "Betriebsmodus" - eine große, ggf. mehrere Pflanzenreihen überspannende Spurweite aufweist, für seinen Transport zum Einsatzort und von diesem weg - im "Überführungsmodus" - auf solch eine geringe Spurweite zu verstellen, dass der Transport mittels eines normalen, straßentauglichen, keinerlei Sondervorschriften unterliegenden Anhängers - oder eines sonstigen Fahrzeugs mit einer vergleichbaren Ladesituation - durchgeführt werden kann. Für die mit dem jeweiligen Einsatz verbundenen Kosten ist dies ein unschätzbarer Vorteil; denn jeder anmeldepflichtige Sondertransport mit Überbreite löst erhebliche Kosten (z. B. für Begleitfahrzeuge etc.) aus, und zudem leidet unter der Anmeldepflicht die Flexibilität des Einsatzes. Umgekehrt lässt sich durch die besagte Verstellbarkeit ein leicht, geradezu beliebig transportierbares mehrspuriges Stelzenfahrzeug für den Einsatz mit geringem Aufwand auf eine solche (große) Spurbreite verstellen, dass (selbst bei sehr leichter Bauweise; s. u.) eine so hohe Kippstabilität gewährleistet ist, dass ein möglicher Führerstand auf einem Niveau oberhalb der Traversenstrukturen angeordnet sein kann. Das ist im Hinblick auf eine gute Übersicht des Bedieners auf die Kultur bzw. sonstige Fläche im Einsatz ein ausschlaggebender Vorteil.

Indem bei dem erfindungsgemäßen Stelzenfahrzeug weiterhin, wie im Anspruch 1 angegeben, auch die Stelzenstrukturen mehrteilig ausgeführt sind mit einem mit dem zugeordneten Endstück der betreffenden Traversenstruktur verbundenen Primärteil und einem an diesem in verschiedenen Höhenpositionen fixierbaren Sekundärteil, an welchem die zugeordnete Radträgereinheit angeordnet ist, lässt sich auch die Höhe des Stelzenfahrzeugs mit geringem Aufwand verändern. So kann insbesondere die Gesamthöhe des Stelzenfahrzeugs für dessen Transport, auf einem Anhänger oder dergleichen verladen, auf öffentlichen Straßen abgesenkt werden. Ebenfalls kann die Höhe der Traversenstrukturen oberhalb des zu befahrenden Untergrunds unter Berücksichtigung der Höhe der zu überfahrenen Pflanzen an die jeweiligen Anforderungen angepasst werden. So können insbesondere die Traversenstrukturen auf die niedrigste für das Überfahren der Pflanzen erforderliche Höhe eingestellt werden, so dass der Schwerpunkt des Stelzenfahrzeugs nicht höher ist als für den jeweiligen Einsatz unbedingt nötig. Dies ist günstig im Hinblick auf eine optimale Kippstabilität. Einem besonders geringen Gewicht des Stelzenfahrzeugs und somit einem bodenschonenden geringen Bodendruck wie auch geringen Herstellungskosten kommt dabei die Abwesenheit von Verstellantrieben, welche eine Positionsveränderung der Sekundärteile und der Primärteile der Stelzenstrukturen des Stelzenfahrzeugs zueinander - und somit eine Verstellung der Höhe der Traversenstrukturen über dem Boden - bewirken, entgegen.

Unter Nutzung der vorstehend dargelegten und erläuterten Ausführung des erfindungsgemäßen Stelzenfahrzeugs und des seinem Transport dienenden Anhängers lässt sich das Verladen des Stelzenfahrzeugs auf dem Anhänger in besonders bevorzugter Weise wie folgt abwickeln: Das - von seinem Einsatz im "Betriebsmodus" her auf große Spurweite (Arbeits-Spurweite) und große Bodenfreiheit (Arbeitshöhe) eingestellte - Stelzenfahrzeug fährt über den Anhänger, so dass dessen Ladefläche zwischen den beiden Spuren des Stelzenfahrzeugs liegt. (Alternativ fährt Anhänger in kinematischer Umkehr entsprechend unter das auf große Spurweite und große Bodenfreiheit eingestellte Stelzenfahrzeug.) Mittels der sich auf dem Anhänger abstützenden Hubeinrichtung, welche beispielsweise an Längsträgern (s. u.) der Fahr- und Tragstruktur des Stelzenfahrzeugs oder sonstigen zentralen Elementen von dessen Fahr- und Tragstruktur angreift, wird das Stelzenfahrzeug dann unterstützt, so dass die Räder entlastet bzw. sogar etwas vom Boden abgehoben werden. Nachdem sodann bei den Stelzenstrukturen die Fixierung der Primär- und der Sekundärteile relativ zueinander aufgehoben wurde, werden die Stelzenstrukturen zur Verkürzung von deren Länge verstellt, wobei hierzu die Primär- und die Sekundärteile relativ zueinander verschoben werden. Hierzu wird - bei Abwesenheit von fahrzeugeigenen Höhenverstellantrieben - der durch die dem Anhänger zugeordnete Hubeinrichtung gestützte Bereich der Fahr- und Tragstruktur des Stelzenfahrzeugs mittels der Hubeinrichtung zunehmend abgesenkt, bis die relative Stellung der Primär- und die Sekundärteile zueinander dem Überführungsmodus entspricht. In dieser Stellung werden die Primär- und die Sekundärteile der Stelzenstrukturen sodann wieder fixiert. Hernach wird das Stelzenfahrzeug mittels der Hubeinrichtung auf eine solche Höhe gebracht, dass sich seine Räder auf einem über dem Niveau der Ladefläche liegenden Niveau befinden.

Sodann werden - nach Aufhebung der entsprechenden Fixierung - die Endstücke der vorderen und der hinteren Traversenstruktur so weit nach innen, zur Fahrzeugmitte des Stelzenfahrzeugs hin verstellt, bis sich dessen Räder oberhalb der Ladefläche des Anhängers befinden. Anschließend wird das Stelzenfahrzeug, welches sich somit nun - hinsichtlich Höhe und Breite - in seinem "Überführungsmodus" befindet, mittels der Hubeinrichtung abgesenkt, bis es mit seinen Rädern auf der Ladefläche des Anhängers aufsteht. Für die folgende Transportfahrt zu einem weiteren Einsatzort wird das Stelzenfahrzeug gemäß den geltenden Vorschriften gesichert. Das Abladen des Stelzenfahrzeugs von dem Anhänger erfolgt sinngemäß in umgekehrter Reihenfolge zu dem vorstehend beschriebenen Verladen.

Vor dem Absenken des Stelzenfahrzeugs auf den Anhänger kann - bei entsprechender bevorzugter Ausgestaltung des Anhängers - noch eine "Feinjustierung" der Lage des Stelzenfahrzeugs bezüglich des Anhängers erfolgen. So kann insbesondere eine Schiebe-Ausgleichsanordnung vorgesehen sein, welche ein seitliches Verschieben des angehobenen Stelzenfahrzeugs relativ zum Anhänger ermöglicht. In diesem Sinne kann beispielsweise die mindestens eine Scherenheber- oder sonstige Hubanordnung auf einem Schlitten aufgebaut sein, welcher sich auf zugeordneten, ladeplattformseitigen Schienen seitwärts nach links und rechts verschieben lässt. Und ferner kann alternativ oder zusätzlich eine Dreh-Ausgleichsanordnung vorgesehen sein, welche ein Drehen des angehobenen Stelzenfahrzeugs relativ zum Anhänger um eine vertikale Achse ermöglicht. Zur Realisierung einer solchen Dreh-Ausgleichsanordnung kann beispielsweise eine Tragplatte, die das Fahrgestell des Stelzenfahrzeugs unterstützt, nach Art eines Drehtellers ausgeführt sein.

Die beim Verladen und beim Abladen zum Einsatz kommende Hubeinrichtung (z. B. in Form mehrerer, hydraulisch angetriebener Scherenheber) kann dabei fester, integraler Bestandteil des entsprechend ausgestatteten, spezifisch auf das individuelle Stelzenfahrzeug abgestimmten Anhängers sein.

Gemäß einer ersten bevorzugten Weiterbildung der Erfindung sind die Endstücke und die Mittelstücke der Traversenstrukturen sowie die Sekundärteile und die Primärteile der Stelzenstrukturen mittels Klemmverbindungen zueinander fixierbar. Bei geeigneter Ausführung lässt sich mittels derartiger Klemmverbindungen insbesondere eine stufenlose Verstellbarkeit realisieren. Bei Verwendung von Profilrohren für die Endstücke und die Mittelstücke der Traversenstrukturen und/oder die Sekundärteile und die Primärteile der Stelzenstrukturen und dem Einsatz von solchen Klemmverbindungen, bei denen die betreffenden Profilrohre von jeweils mindestens einer Spannklammer umgriffen werden, besteht ein anderer bedeutender Vorteil von (rein reibschlüssigen) zwischen den jeweiligen Komponenten wirkenden Klemmverbindungen darin, dass sich die Profilrohre schwächende Eingriffe vermeiden lassen. Damit können die Profilrohre dementsprechend statisch optimiert ausgelegt werden, was der Zielsetzung eines möglichst geringen Gewichts des Stelzenfahrzeugs entgegenkommt. Allerdings kann, ggf. zusätzlich zu einer rein reibschlüssigen Klemmverbindung im vorstehenden Sinne, eine auf bestimmte, definierte Positionen der Endstücke und der Mittelstücke der Traversenstrukturen und/oder der Sekundärteile und der Primärteile der Stelzenstrukturen relativ zueinander voreingestellte formschlüssige Fixierung mittels Bolzen, Stiften, Rasten oder dergleichen vorgesehen sein. Hierunter fallen Klemmverbindungen mit Klemm- bzw. Spannbolzen, welche die miteinander zu verklemmenden Profilrohre quer durchsetzen. Solche formschlüssigen Fixierungen entlasten eine ggf. vorgesehene rein reibschlüssige Klemmverbindung und tragen zu einer erhöhten Sicherheit bei. Selbsttägig einrastende Rastverbindungen (insbesondere an den Stelzenstrukturen) wirken sich zudem im Sinne eines gesteigerten Bedienkomforts beim Umstellen des Stelzenfahrzeugs vom Betriebsmodus in den Überführungsmodus (und umgekehrt) aus.

Ebenfalls im Sinne der Zielsetzung eines möglichst geringen Gewichts sind, gemäß einer anderen bevorzugten Weiterbildung der Erfindung, die Mittelstücke der Traversenstrukturen rahmenartig aufgebaut mit zwei Querholmen, welche über Längsholme miteinander verbunden sind. Dies kommt einer günstigen Statik mit geringst möglichem baulichem Aufwand und unter minimalem Materialeinsatz entgegen. Besonders bevorzugt sind dabei die Querholme der Traversenstrukturen und deren Endstücke aus Profilrohren mit übereinstimmendem Profilquerschnitt gebildet.

In entsprechender Weise sind besonders bevorzugt die Sekundärteile der Stelzenstrukturen rahmenartig aufgebaut mit zwei Vertikalholmen, welche über Horizontalholme miteinander verbunden sind. Wiederum können dabei die Vertikalholme der Stelzenstrukturen und deren Primärteile aus Profilrohren mit übereinstimmendem Profilquerschnitt gebildet sein.

Gemäß einer wiederum anderen bevorzugten Weiterbildung der Erfindung sind die weiter oben erläuterten Mittelstücke der beiden Traversenstrukturen über Längsträger miteinander verbunden. Diese können insbesondere Teil eines Hauptrahmens und über Querträger miteinander verbunden sein. Insbesondere kann, in bevorzugter Weiterbildung der Erfindung, auf dem entsprechenden Hauptrahmen ein Führerstand aufgebaut und/oder ein Arbeitsgerät, beispielsweise ein Ausbringgerät für das Ausbringen von Schädlingsbekämpfungsmitteln, aufgebaut sein. Die Querträger des Hauptrahmens und Querholme der Traversenstrukturen können dabei wiederum aus Profilrohren mit übereinstimmendem Profilquerschnitt gebildet sein, wobei jeweils ein Querträger des Hauptrahmens mit einem Querholm der betreffenden Traversenstruktur verbunden ist. So kann im Ergebnis die Tragstruktur insgesamt nach Art eines Gerüsts im Wesentlichen allein aus miteinander (insbesondere mittels Klemmverbindungen) verbundenen Profilelementen, nämlich Abschnitten von Profilrohren mit identischem Querschnittsprofil ausgeführt sein.

Für die Herstellung der verschiedenen, vorstehend erläuterten Profilelemente ist Leichtmetall besonders geeignet. Bei Verwendung von Aluminium oder einem anderen Leichtmetall lässt sich eine Optimierung aus Gewicht (und somit Bodendruck), Standardisierungspotential, konstruktivem Aufwand und Kosten (Entwicklungs-, Herstellungs- und Betriebskosten) erreichen. Somit zeichnet sich eine besonders bevorzugte Weiterbildung der Erfindung dadurch aus, dass die Traversenstrukturen und die Stelzenstrukturen sowie ein ggf. vorgesehener Hauptrahmen aus Leichtmetallprofilelementen aufgebaut sind.

Zu einem erhöhten Bedienkomfort des erfindungsgemäßen Stelzenfahrzeugs trägt bei, wenn Verstellantriebe (wie beispielsweise Hydraulikzylinder oder insbesondere elektrische Spindelantriebe oder dergleichen elektrische Linearantriebe) vorgesehen sind, mittels derer sich eine Positionsveränderung der Endstücke und der Mittelstücke der Traversenstrukturen zueinander bewirken lässt. Rein elektrische Verstellantriebe sind dabei unter dem Aspekte eines geringeren Gewichts gegenüber elektro-hydraulischen Verstellantrieben zu bevorzugen. Im Interesse eines ganz besonders geringen Gewichts und somit einen besonders geringen Bodendrucks kann bei dem erfindungsgemäßen Stelzenfahrzeug aber auch auf solche, eine Positionsveränderung der Endstücke und der Mittelstücke der Traversenstrukturen zueinander bewirkende Verstellantriebe verzichtet werden. Eine Verstellung der Traversenstrukturen hinsichtlich der Spurbreite - bei vom Boden abgehobenen Rädern - erfolgt in diesem Falle von Hand bzw. gegebenenfalls unter Zuhilfenahme externer Geräte (z. B. Akkuschrauber zum Antrieb einer Verstellspindel).

Eine andere bevorzugte Weiterbildung des erfindungsgemäßen Stelzenfahrzeugs zeichnet sich dadurch aus, dass zwei angetriebene und zwei lenkbare Räder vorgesehen sind. Dabei kann besonders bevorzugt bei den lenkbaren Rädern jeweils ein elektrischer Lenkmechanismus in die betreffende Radträgereinheit integriert und/oder bei den angetriebenen Rädern ein elektrischer Antriebsmotor in die betreffende Radträgereinheit integriert sein. Für die Antriebsmotoren kommen dabei verschiedene Ausführungsvarianten in Betracht, beispielsweise Radnabenmotoren, stehende Motoren mit einer Kegelrad-Umlenkung, liegende Motoren mit Kettenübertragung etc. Da sich auf diese Weise, d. h. durch die Integration des Lenkmechanismus' bzw. des Antriebsmotors in die Radträgereinheit die dem betreffenden Rad zugeordnete Fahrantriebs- bzw. Lenkfunktionalität auf die Radträgereinheit beschränkt, können die vorderen und die hinteren Stelzenstrukturen identisch ausgeführt sein. Auch dies ist ein Gesichtspunkt der Kostenminimierung.

Soweit vorstehend verschiedentlich ein Führerstand erwähnt wurde, so darf dies nicht dahingehend interpretiert werden, dass das erfindungsgemäße Stelzenfahrzeug zwingend durch einen mitfahrenden Fahrzeugführer zu bedienen ist. Vielmehr können erfindungsgemäße Stelzenfahrzeuge auch autonom oder aber von einem externen Bediener ferngesteuert fahren.

Im Folgenden wird die vorliegende Erfindung anhand eines in der Zeichnung veranschaulichten bevorzugten Ausführungsbeispiels näher erläutert. Dabei zeigt
- Fig. 1: ein selbstfahrendes zweispuriges Stelzenfahrzeug im Betriebsmodus,
- Fig. 2: das selbstfahrende zweispurige Stelzenfahrzeug nach Fig. 1 im Überführungsmodus,

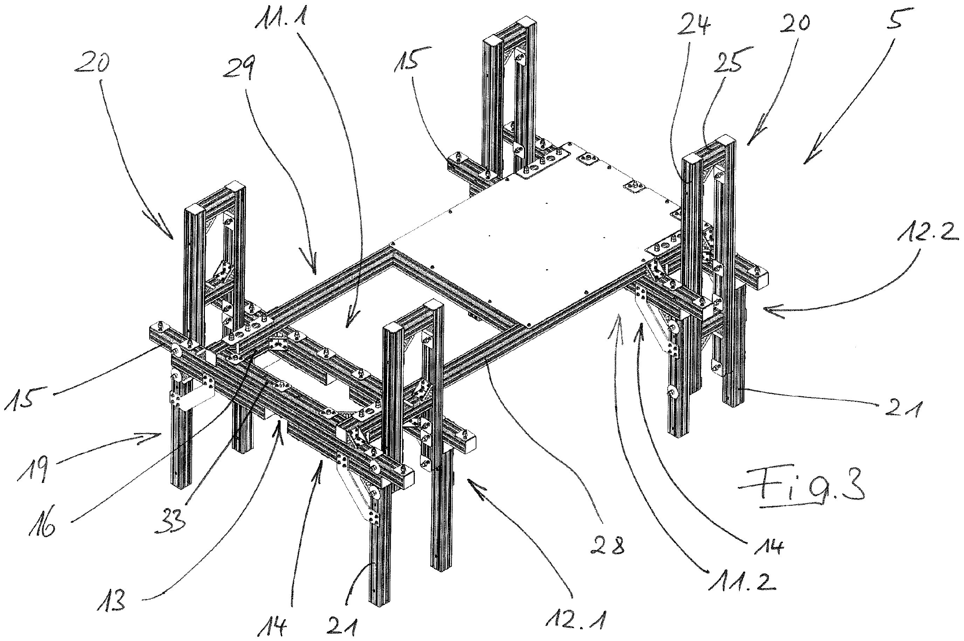

- Fig. 3: den nach Art eines Gerüsts aus Profilelementen ausgeführten Bereich der Trag- und Fahrstruktur des selbstfahrenden zweispurigen Stelzenfahrzeugs nach den Figuren 1 und 2 im Überführungsmodus,

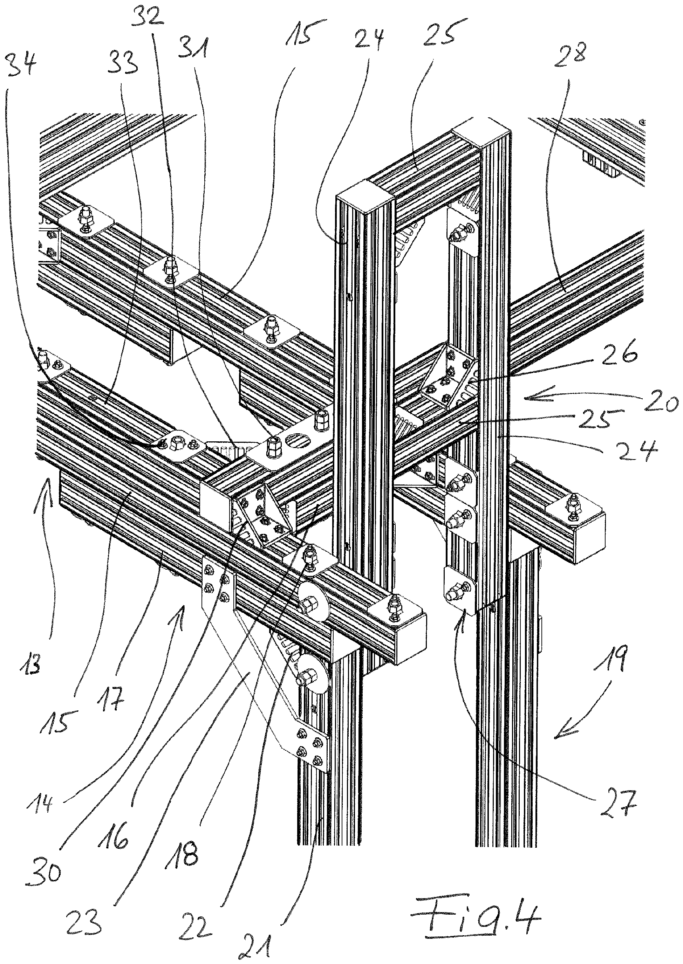

- Fig. 4: einen Ausschnitt, nämlich den linken-vorderen Eckbereich, des in Fig. 3 gezeigten gerüstartigen Bereichs der Trag- und Fahrstruktur des selbstfahrenden zweispurigen Stelzenfahrzeugs nach den Figuren 1 und 2, und
- Fig. 5: in mehreren veranschaulichten Etappen das Verladen des Stelzenfahrzeugs auf den zugeordneten Transportanhänger.

Das in der Zeichnung gezeigte, für land-, garten und forstwirtschaftliche Anwendungen konzipierte, geeignete und ausgeführte selbstfahrende zweispurige Stelzenfahrzeug umfasst eine Fahr- und Tragstruktur 1 und darauf aufgesetzte Aufbauten in Form eines Führerstands 2 und eines Arbeitsgeräts 3. Letzteres ist als ein Ausbringgerät 4 für das Ausbringen von Schädlingsbekämpfungsmitteln ausgeführt. Die Fahr- und Tragstruktur 1 umfasst dabei einen - aus Profilelementen zusammengefügt - nach Art eines Gerüsts ausgeführten Bereich 5 und vier daran angeordnete Radeinheiten 6, 7 mit jeweils einer Radträgereinheit 8, 9 und einem daran angeordneten Rad 10.1 bzw. 10.2.

Die Fahr- und Tragstruktur 1, nämlich deren nach Art eines aus Profilelementen zusammengefügten Gerüsts ausgeführter Bereich 5, umfasst eine quer zur Fahrtrichtung A orientierte vordere Traversenstruktur 11.1 und eine ebenfalls quer zur Fahrtrichtung A orientierte hintere Traversenstruktur 11.2 sowie zwei - beidseits mit der vorderen Traversenstruktur 11.1 verbundene - vordere Stelzenstrukturen 12.1 und zwei - beidseits mit der hinteren Traversenstruktur 11.2 verbundene - hintere Stelzenstrukturen 12.2. Sowohl die vordere als auch die hintere Traversenstruktur 11.1 bzw. 11.2 sind jeweils mehrteilig aufgebaut; sie umfassen jeweils ein Mittelstück 13 sowie linke und rechte Endstücke 14. Die Mittelstücke 13 der Traversenstrukturen 11.1 bzw. 11.2 sind dabei rahmenartig aufgebaut; sie bestehen im Wesentlichen aus jeweils zwei Querholmen 15, welche über zwei Längsholme 16 miteinander verbunden sind. Die Längsholme 16 sind zwischen den beiden Querholmen 15 (in der gleichen Ebene wie diese) so angeordnet, dass die Querholme 15 seitwärts über die Längsholme 16 überstehen.

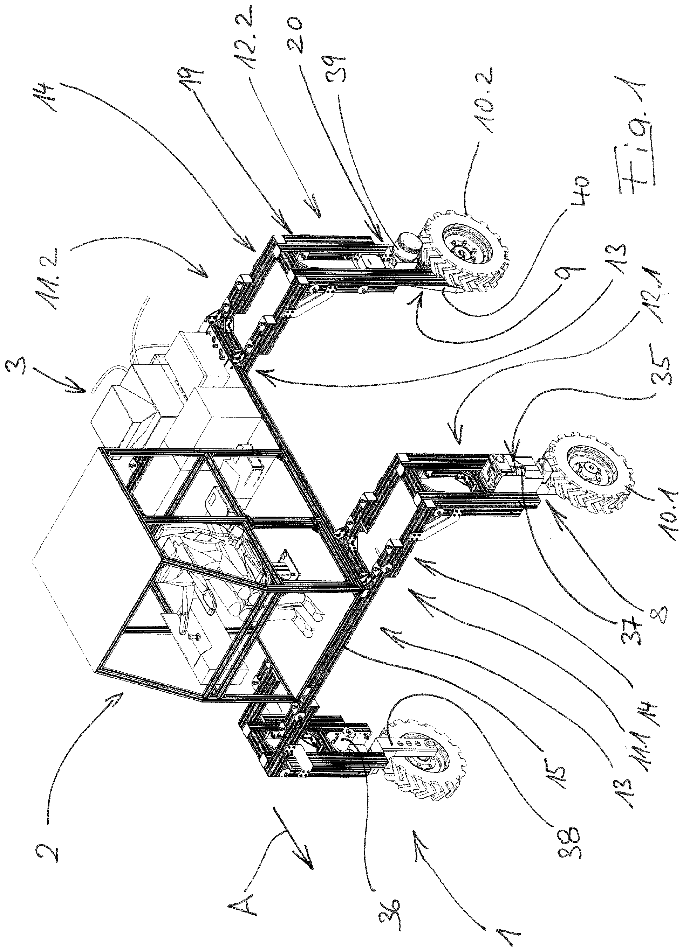

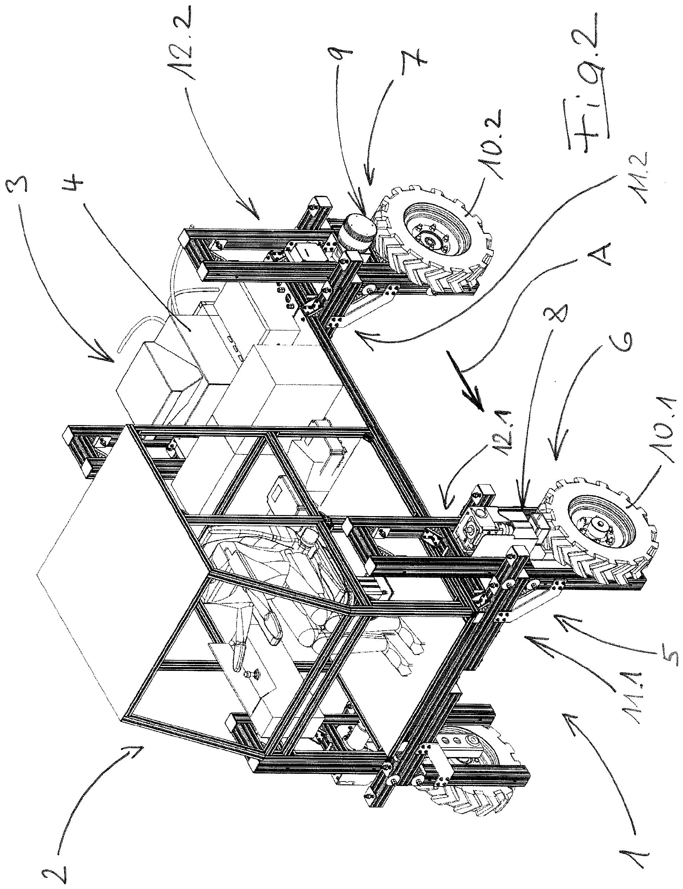

Unterhalb jedes Querholms 15 ist ein durch einen Profilabschnitt 17 gebildetes Endstück 14 der jeweiligen Traversenstruktur 11.1 bzw. 11.2 angeordnet. Das jeweilige Endstück 14 kann relativ zum zugeordneten Querholm 15 des betreffenden Mittelstücks 13 verschiedene Positionen einnehmen, nämlich insbesondere eine maximal ausgefahrene Position (Fig. 1), eine maximal eingefahrene Position (Fig. 2), und beliebige Zwischenpositionen. Mittels der im Bereich der Überstände der Querholme 15 angeordneten Klemmeinrichtungen 18 lässt sich jeweils das Endstück 14 an dem betreffenden Querholm 15 des Mittelstücks 13 fixieren.

Auch die vier Stelzenstrukturen 12.1 bzw. 12.2 sind jeweils mehrteilig aufgebaut. Sie umfassen jeweils einen mit dem zugeordneten Endstück 14 der betreffenden Traversenstruktur 11.1 bzw. 11.2 verbundenen Primärteil 19 und einen an diesem in verschiedenen Höhenpositionen fixierbaren Sekundärteil 20. Der Primärteil 19 der Stelzenstruktur 12.1 bzw. 12.2 ist dabei jeweils durch zwei vertikale Profilabschnitte 21 gebildet, welche starr mit den Endstücken 14 der Traversenstruktur 11.1 bzw. 11.2 verbunden sind. Zur Herstellung fester und steifer Strukturen sind die jeweiligen Verbindungsbereiche dabei durch Füllwinkel 22 sowie durch Verbindungsplatten 23 ausgesteift. Die Sekundärteile 20 der Stelzenstrukturen 12.1 bzw. 12.2 sind rahmenartig aufgebaut mit zwei - zwischen den den jeweiligen Primärteil 19 bildenden Profilabschnitten 21 angeordneten - Vertikalholmen 24, welche über zwei (zwischen diesen angeordnete) Horizontalholme 25 starr miteinander verbunden sind. Die rahmenartigen Sekundärteile 20 sind dabei in den vier zwischen den Vertikalholmen 24 und den Horizontalholmen 25 definierten Eckbereichen durch Füllwinkel 26 ausgesteift. Jeweils lässt sich der Sekundärteil 20 der Stelzenstruktur 12.1 bzw. 12.2 relativ zum Primärteil 19 in unterschiedlichen Höhen, insbesondere in einer maximal ausgefahrenen Position (Fig. 1) und einer maximal eingefahrenen Position (Fig. 2) und beliebigen Zwischenstellungen anordnen und dort mittels der - zwischen den den Primärteil 19 bildenden Profilabschnitten 21 und den Vertikalholmen 24 der Sekundärteile 20 wirkenden - Klemmeinrichtungen 27 fixieren. An jedem der Sekundärteile 20 der Stelzenstrukturen 12.1 bzw. 12.2 ist im unteren Bereich eine Radträgereinheit 8 bzw. 9 angebracht.

Die Trag- und Fahrstruktur 1 weist weiterhin einen zwei Längsträger 28 umfassenden Hauptrahmen 29 auf, an welchem die Mittelstücke 13 der beiden Traversenstrukturen 11.1 und 11.2 angebracht sind. Hierzu sind die Längsträger 28 des Hauptrahmens 29 - über Füllwinkel 30 - mit den Querholmen 15 der Mittelstücke 13 der Traversenstrukturen 11.1 bzw. 11.2 sowie - mittels Klemmverbindungen 31 - mit den unten an ihnen anliegenden Längsholmen 16 der Mittelstücke 13 der Traversenstrukturen 11.1 bzw. 11.2 verbunden. Der Hauptrahmen 29 umfasst weiterhin mehrere sich zwischen den beiden Längsträgern 28 erstreckende, mit diesen - über Füllwinkel 32 - verbundene Querträger 33. Der vordere Querträger 33 des Hauptrahmens 29 ist dabei mit dem vorderen Querholm 15 des Mittelstücks 13 der vorderen Traversenstruktur 11.1 über Klemmeinrichtungen 34 verbunden.

Sämtliche vorstehend erläuterten Profilabschnitte, aus denen sich die Traversenstrukturen 11.1 und 11.2, die Stelzenstrukturen 12.1 und 12.2 und der Hauptrahmen 29 zusammensetzen, weisen übereinstimmende Profilquerschnitte auf. Es handelt sich um Abschnitte eines Aluminium-Strangpressprofils mit im Wesentlichen quadratischer Querschnitts-Grundform mit jeweils zwei T-förmigen Klemmnuten auf allen vier Flächen. Für typische Anwendungsfälle eines bemannten Stelzenfahrzeugs mit einem durchschnittlich schweren Anbaugerät ist ein Profil, dessen Querschnitts-Grundform 9cm Kantenlänge aufweist, günstig.

Das Stelzenfahrzeug verfügt über zwei angetriebene, nicht lenkbare Hinterräder 10.2 und zwei lenkbare, nicht angetriebene Vorderräder 10.1. Dementsprechend ist in jede der beiden vorderen Radträgereinheiten 8, welche mit dem Sekundärteil 20 der zugeordneten vorderen Stelzenstruktur 12.1 verbunden ist, ein elektrischer Lenkmechanismus 35 integriert. Dieser umfasst jeweils einen Lenkmotor 36 und ein Lenkgetriebe 37, dessen Ausgangswelle um eine vertikale Achse schwenkbar ist. Mit ihr ist ein Schenkel des Winkelstücks 38, an dessen anderem Schenkel das jeweilige Vorderrad 10.1 drehbar gelagert ist, fest verbunden.

Um - für eine autonome Fortbewegung des Stelzenfahrzeugs - die Hinterräder 10.2 anzutreiben, sind in die - mit den Sekundärteilen 20 der beiden hinteren Stelzenstrukturen 12.2 verbundenen - hinteren Radträgereinheiten 9 elektrische Antriebsmotoren 39 integriert. Diese sind oberhalb der Hinterräder 10.2 angeordnet. Der jeweilige Antriebsstrang umfasst ein Höhenverlagerungsgetriebe 40.

Für den problemlosen Transport des Stelzenfahrzeugs im Überführungsmodus beträgt die minimale Breite über alles bevorzugt nicht mehr als 2,15m, besonders bevorzugt zwischen 2,05m und 2,15m, insbesondere etwa 2,12m. Die Breite des Hauptrahmens 29 beträgt bevorzugt etwa zwischen 1,1m und 1,25m, besonders bevorzugt zwischen 1,15m und 1,2m, insbesondere etwa 1,18m. Bei typischen Anwendungsfällen werden im Überführungsmodus die Querholme 15 der Mittelstücke 13 der Traversenstrukturen 11.1 und 11.2 bevorzugt etwa 15cm bis 20cm, besonders bevorzugt etwa 18cm bis 19cm, insbesondere etwa 18,5cm über die maximal eingefahrenen Endstücke 14 der Traversenstrukturen überstehen. In diesem Falle können die Außenkanten der Radträgereinheiten 8, 9 (samt Lenkmechanismus 35 bzw. Antriebsmotoren 39) und der Räder 10.1 und 10.2 etwa bündig mit den Enden der Traversenstrukturen 11.1 bzw. 11.2 abschließen, so dass der Raum optimal genutzt wird.

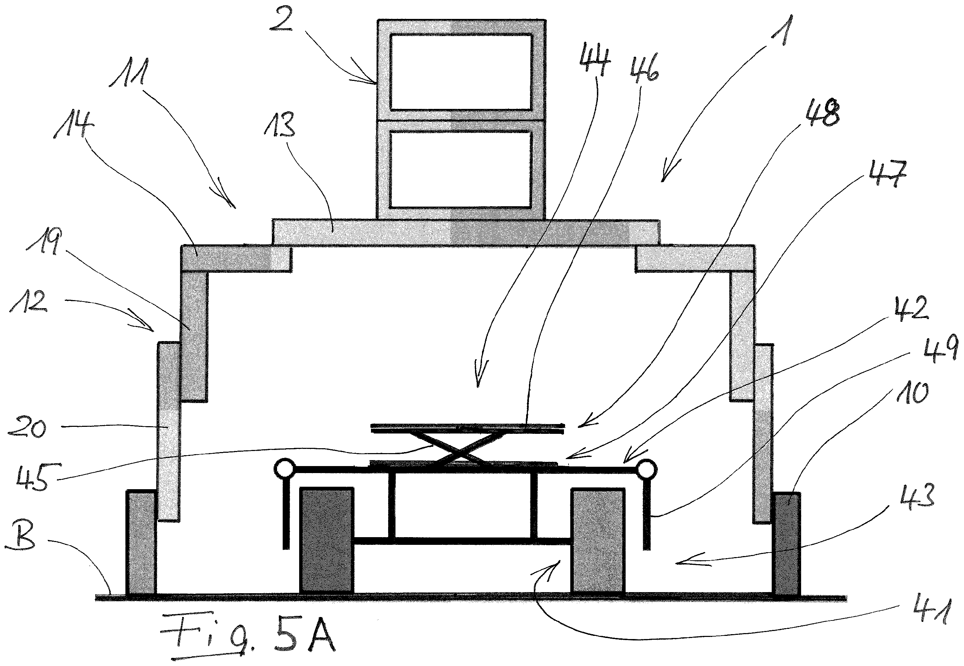

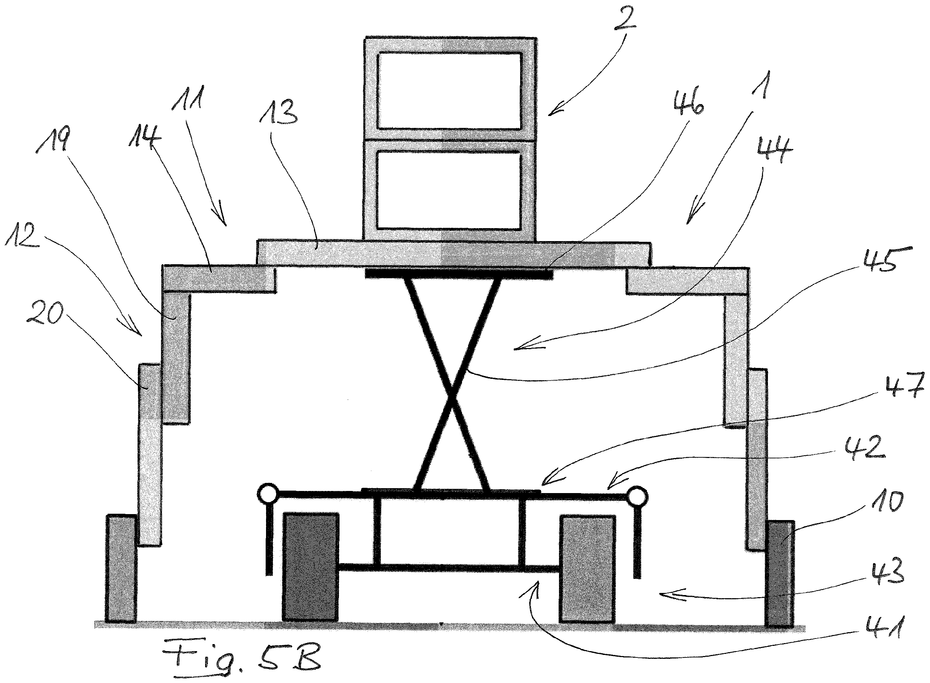

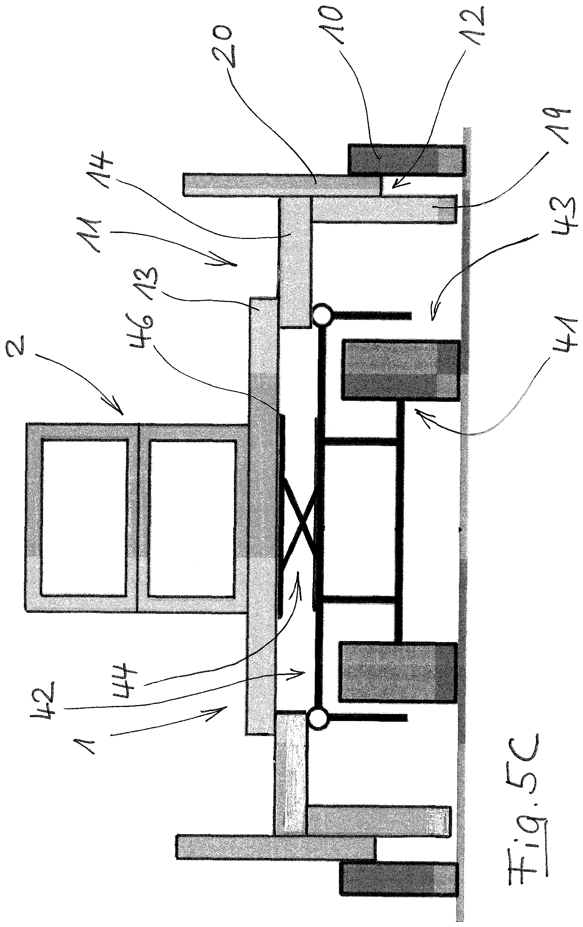

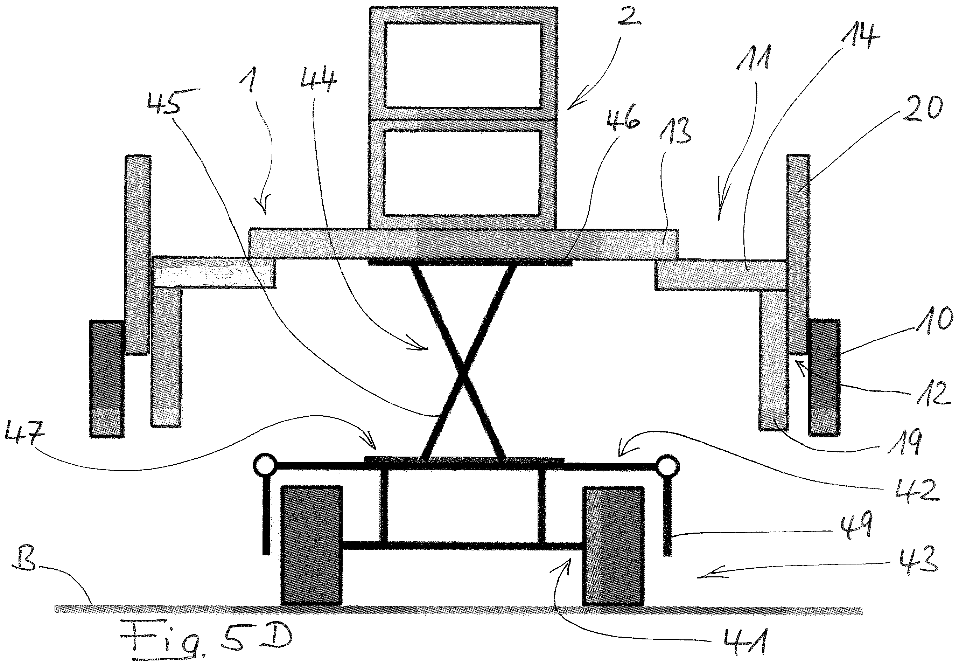

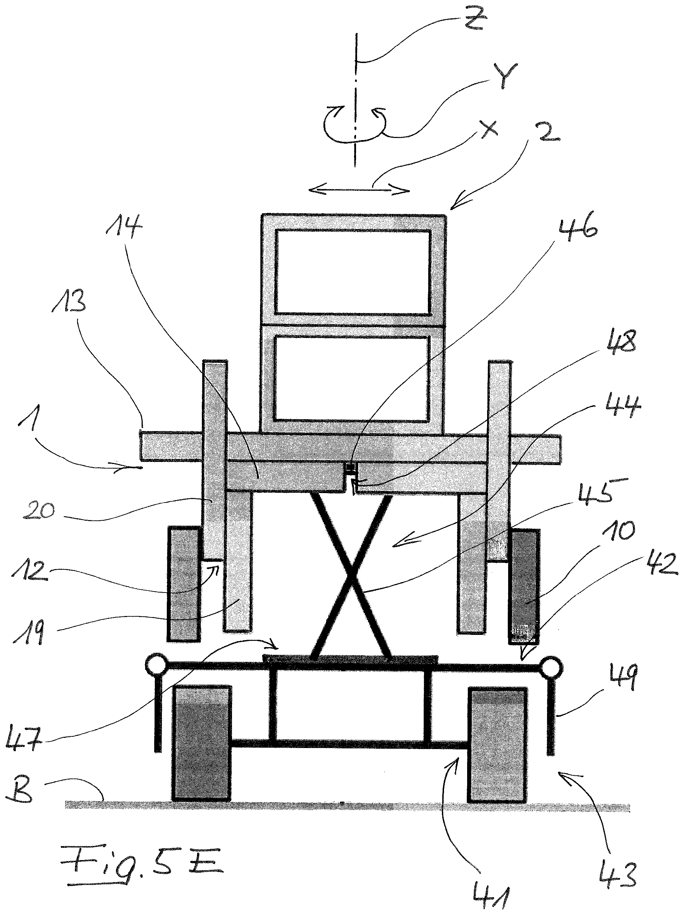

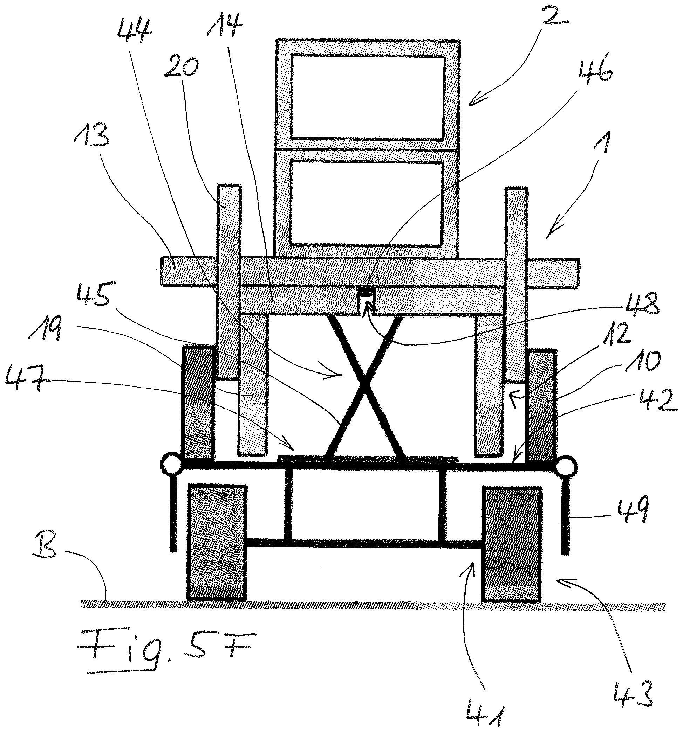

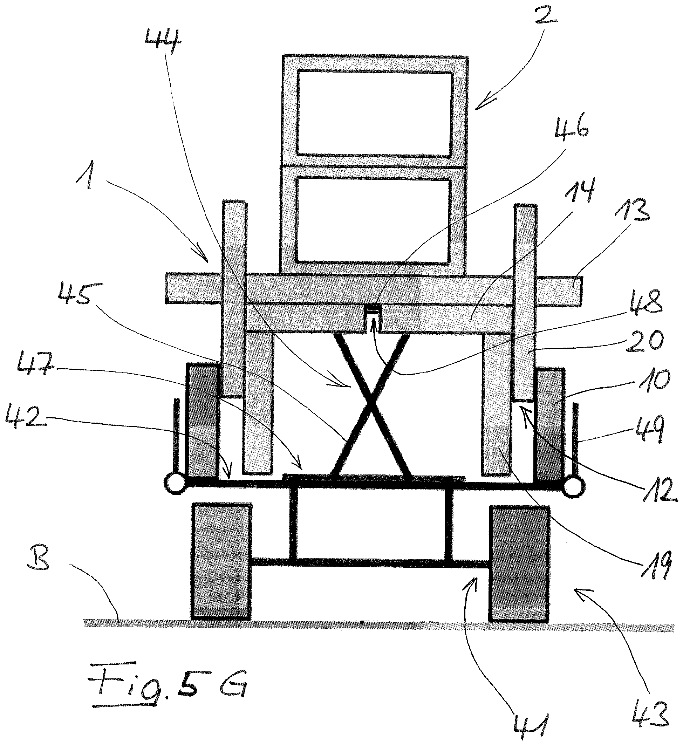

Der - nach erfolgtem Einsatz des vorstehend im Einzelnen erläuterten Stelzenfahrzeugs - am Einsatzort erfolgende Beladevorgang auf den zugehörigen, eine sich auf einem Fahrwerk 41 abstützende Ladefläche 42 aufweisenden Anhänger 43, um das Stelzenfahrzeug zu überführen, kann sich, wie dies in den Abbildungen der Fig. 5 schematisch veranschaulicht ist, wie folgt gestalten:
Das - von seinem Einsatz im "Betriebsmodus" her auf große Spurweite (Arbeits-Spurweite) und große Bodenfreiheit (Arbeitshöhe) eingestellte - Stelzenfahrzeug fährt über den Anhänger 43, so dass dessen Ladefläche 42 zwischen den beiden Spuren des Stelzenfahrzeugs liegt (Fig. 5A). (Alternativ kann der Anhänger 43 unter das stehende Stelzenfahrzeug geschoben/gefahren werden.) Die dem Anhänger 43 zugeordnete, sich auf diesem abstützende Hubeinrichtung 44, welche gemäß der Skizze beispielsweise einen hydraulischen Scherenheber 45 umfassen kann, wird dann nach oben ausgefahren, bis ihre obere Tragplatte 46 die Fahr- und Tragstruktur 1 des Stelzenfahrzeugs, beispielsweise deren Längsträger 28 (s. o.), erreicht und - bei fortgesetzter Hubbewegung der Hubeinrichtung 44 - das Stelzenfahrzeug so stark unterstützt bzw. so weit angebt, dass die Räder 10 entlastet (Fig. 5B) bzw. sogar etwas vom Boden B abgehoben werden. Nun wird bei den Stelzenstrukturen 12 - durch Lösen der Klemmeinrichtungen 27 (s. o.) - die Fixierung der Primär- und der Sekundärteile 19, 20 relativ zueinander aufgehoben, so dass sich die Primär- und die Sekundärteile 19, 20 relativ zueinander verschieben lassen. Zur Verkürzung der Länge der Stelzenstrukturen 12 wird die Hubeinrichtung 44 eingefahren, d. h. der durch die Hubeinrichtung 44 gestützte Bereich der Fahr- und Tragstruktur 1 des Stelzenfahrzeugs mittels der Hubeinrichtung 44 zunehmend abgesenkt. Dies geschieht, bis die relative Stellung der Primär- und die Sekundärteile 19, 20 der Stelzenstrukturen 12 zueinander dem Überführungsmodus entspricht, bei dem die Stelzenstrukturen 12 typischerweise ihre minimale Länge aufweisen (Fig. 5C). In dieser Stellung werden die Primär- und die Sekundärteile 19, 20 der Stelzenstrukturen 12 sodann - durch Anziehen der Klemmeinrichtungen 27 - wieder relativ zueinander fixiert.

Hernach wird das Stelzenfahrzeug mittels der Hubeinrichtung 44 auf eine solche Höhe gebracht, dass sich die Räder 10 auf einem über dem Niveau der Ladefläche 42 des Anhängers 43 liegenden Niveau befinden (Fig. 5D). Sodann werden - nach Aufhebung der entsprechenden Fixierung - die Endstücke 14 der vorderen und der hinteren Traversenstruktur 11 so weit nach innen, zur Fahrzeugmitte des Stelzenfahrzeugs hin verstellt, bis sich dessen Räder 10 oberhalb der Ladefläche 42 des Anhängers 43 befinden (Fig. 5E). Verfügt die Hubeinrichtung 44 über Ausgleichsanordnungen 47, 48, welche - innerhalb geringer vorgegebener Grenzen - ein seitliches Verschieben (Doppelpfeil X) des angehobenen Stelzenfahrzeugs und/oder ein Drehen (Doppelpfeil Y) des Stelzenfahrzeugs um eine vertikale Achse Z ermöglichen, lässt sich das Stelzenfahrzeug in seinem Überführungsmodus nun exakt zu der Ladefläche 42 des Anhängers 43 positionieren.

Abschließend wird das Stelzenfahrzeug, welches sich somit nun - hinsichtlich Höhe und Breite - in seinem "Überführungsmodus" befindet, mittels der Hubeinrichtung 44 abgesenkt, bis es mit seinen Rädern 10 auf der Ladefläche 42 des Anhängers 43 aufsteht (Fig. 5F). Für die folgende Überführungs-Transportfahrt zu einem weiteren Einsatzort wird das Stelzenfahrzeug gemäß den geltenden gesetzlichen Vorschriften gesichert. Bei entsprechender Ausführung des Anhängers 43 gehört hierzu auch das Hochklappen (bzw. Verfahren nach oben) von ggf. vorhandenen Anhänger-Seitenteilen 49 (vgl. Fig. 5G)

Das Abladen des Stelzenfahrzeugs von dem Anhänger 43 erfolgt sinngemäß in umgekehrter Reihenfolge zu dem vorstehend beschriebenen Verladen.

## Patentansprüche

1. Kit, umfassend ein selbstfahrendes zweispuriges Stelzenfahrzeug, insbesondere für land- und forstwirtschaftliche Anwendungen, und einen dem Transport des Stelzenfahrzeugs dienenden, eine Ladefläche (42) aufweisenden Anhänger (43), wobei:
- das Stelzenfahrzeug eine vier Räder (10.1, 10.2) aufweisende Fahr- und Tragstruktur (1) mit einer quer zur Fahrtrichtung (A) orientierten vorderen Traversenstruktur (11.1) und einer quer zur Fahrtrichtung orientierten hinteren Traversenstruktur (11.2) umfasst,
- beidseitig endseitig an der vorderen Traversenstruktur (11.1) zwei vordere Stelzenstrukturen (12.1) und beidseitig endseitig an der hinteren Traversenstruktur (11.2) zwei hintere Stelzenstrukturen (12.2) angeordnet sind,
- an den Stelzenstrukturen (12.1, 12.2) jeweils mindestens ein Rad (10.1, 10.2) tragende Radträgereinheiten (8, 9) angeordnet sind,
- die vordere und die hintere Traversenstruktur (11.1, 11.2) jeweils mehrteilig aufgebaut sind mit einem Mittelstück (13) und einem an diesem in verschiedenen Breitenpositionen fixierbaren linken und rechten Endstück (14), mit welchen die jeweils zugeordnete Stelzenstruktur (12.1, 12.2) verbunden ist,
- die Stelzenstrukturen (12.1, 12.2) jeweils mehrteilig aufgebaut sind mit einem mit dem zugeordneten Endstück (14) der betreffenden Traversenstruktur (11.1, 11.2) verbundenen Primärteil (19) und einem an diesem in verschiedenen Höhenpositionen fixierbaren Sekundärteil (20), an welchem die zugeordnete Radträgereinheit (8, 9) angeordnet ist,
**dadurch gekennzeichnet,**
- **dass** keine eine Positionsveränderung der Sekundärteile (20) und der Primärteile (19) der Stelzenstrukturen (12.1, 12.2) des Stelzenfahrzeugs zueinander bewirkende Verstellantriebe vorgesehen sind und
- **dass** eine an zentralen Elementen der Fahr- und Tragstruktur (1) des Stelzenfahrzeugs angreifende, sich auf dem Anhänger (43) abstützende Hubeinrichtung (44) vorgesehen ist.

2. Kit nach Anspruch 1, **dadurch gekennzeichnet, dass** bei dem Stelzenfahrzeug die Endstücke (14) und die Mittelstücke (13) der Traversenstrukturen (11.1, 11.2) sowie die Sekundärteile (20) und die Primärteile (19) der Stelzenstrukturen (12.1, 12.2) mittels Klemmverbindungen (18, 27) zueinander fixierbar sind.

3. Kit nach Anspruch 1 oder Anspruch 2, **dadurch gekennzeichnet, dass** bei dem Stelzenfahrzeug die Mittelstücke (13) der Traversenstrukturen (11.1, 11.2) rahmenartig aufgebaut sind mit zwei Querholmen (15), welche über Längsholme (16) miteinander verbunden sind.

4. Kit nach Anspruch 3, **dadurch gekennzeichnet, dass** die Querholme (15) der Traversenstrukturen (11.1, 11.2) und deren Endstücke (14) aus Standardelementen mit übereinstimmendem Querschnitt, insbesondere aus Standard-Profilrohren mit übereinstimmendem Profilquerschnitt, gebildet sind.

5. Kit nach einem der Ansprüche 1 bis 4, **dadurch gekennzeichnet, dass** bei dem Stelzenfahrzeug die Sekundärteile (20) der Stelzenstrukturen (12.1, 12.2) rahmenartig aufgebaut sind mit zwei Vertikalholmen (24), welche über Horizontalholme (25) miteinander verbunden sind.

6. Kit nach Anspruch 5, **dadurch gekennzeichnet, dass** die Vertikalholme (24) der Sekundärteile (20) der Stelzenstrukturen (12.1, 12.2) und deren Primärteile (19) aus Standardelementen mit übereinstimmendem Querschnitt, insbesondere aus Standard-Profilrohren mit übereinstimmendem Profilquerschnitt, gebildet sind.

7. Kit nach einem der Ansprüche 1 bis 6, **dadurch gekennzeichnet, dass** bei dem Stelzenfahrzeug die Mittelstücke (13) der beiden Traversenstrukturen (11.1, 11.2) über Längsträger (28) miteinander verbunden sind.

8. Kit nach Anspruch 7, **dadurch gekennzeichnet, dass** die Längsträger (28) Teil eines Hauptrahmens (29) sind und über Querträger (33) miteinander verbunden sind.

9. Kit nach den Ansprüchen 3 und 8, **dadurch gekennzeichnet, dass** die Querträger (33) des Hauptrahmens (29) und Querholme (15) der Traversenstrukturen (11.1, 11.2) aus Standardelementen mit übereinstimmendem Querschnitt, insbesondere aus Standard-Profilrohren mit übereinstimmendem Profilquerschnitt, gebildet sind, wobei jeweils ein Querträger (33) des Hauptrahmens (29) mit einem Querholm (15) der betreffenden Traversenstruktur (11.1, 11.2) verbunden ist.

10. Kit nach einem der Ansprüche 1 bis 9, **dadurch gekennzeichnet, dass** bei dem Stelzenfahrzeug zwei angetriebene Räder (10.2) und zwei lenkbare Räder (10.1) vorgesehen sind.

11. Kit nach Anspruch 10, **dadurch gekennzeichnet, dass** bei den lenkbaren Rädern (10.1) ein elektrischer Lenkmechanismus (35) in die betreffende Radträgereinheit (8) integriert ist.

12. Kit nach Anspruch 10 oder Anspruch 11, **dadurch gekennzeichnet, dass** bei den angetriebenen Rädern (10.2) ein elektrischer Antriebsmotor (39) in die betreffende Radträgereinheit (9) integriert ist.

13. Kit nach einem der Ansprüche 1 bis 12, **dadurch gekennzeichnet, dass** bei dem Stelzenfahrzeug die Traversenstrukturen (11.1, 11.2) und die Stelzenstrukturen (12.1, 12.2) sowie ein Hauptrahmen (29) aus Leichtmetallprofilelementen aufgebaut sind.

14. Kit nach einem der Ansprüche 1 bis 13, **dadurch gekennzeichnet, dass** bei dem Stelzenfahrzeug keinerlei eine Positionsveränderung der Endstücke (14) und der Mittelstücke (13) der Traversenstrukturen (11.1, 11.2) zueinander bewirkende Verstellantriebe vorgesehen sind.

15. Kit nach Anspruch 14, **dadurch gekennzeichnet, dass** der Verstellung der Spurbreite dienende, durch externe Geräte betätigbare Verstellspindeln vorgesehen sind.

16. Kit nach einem der Ansprüche 1 bis 13, **dadurch gekennzeichnet, dass** bei dem Stelzenfahrzeug eine Positionsveränderung der Endstücke (14) und der Mittelstücke (13) der Traversenstrukturen (11.1, 11.2) zueinander bewirkende Verstellantriebe, insbesondere elektrische Linear-Verstellantriebe vorgesehen sind.

17. Kit nach einem der Ansprüche 1 bis 16, **dadurch gekennzeichnet, dass** die Hubeinrichtung (44) fester, integraler Bestandteil des Anhängers (43) ist.

18. Kit nach einem der Ansprüche 1 bis 17, **dadurch gekennzeichnet, dass** bei dem Stelzenfahrzeug auf einem Hauptrahmen (29) ein Führerstand (2) aufgebaut ist.

19. Kit nach einem der Ansprüche 1 bis 18, **dadurch gekennzeichnet, dass** bei dem Stelzenfahrzeug auf einem Hauptrahmen (29) ein Arbeitsgerät (3) aufgebaut ist.

20. Kit nach Anspruch 19, **dadurch gekennzeichnet, dass** das Arbeitsgerät (3) ein Ausbringgerät (4) für das Ausbringen von Schädlingsbekämpfungsmitteln ist.

21. Kit nach einem der Ansprüche 1 bis 20, **dadurch gekennzeichnet, dass** der Positionsveränderung der Sekundärteile (20) und der Primärteile (19) der Stelzenstrukturen (12.1, 12.2) des Stelzenfahrzeugs zueinander dienende, von Hand oder ggf. unter Verwendung externer Geräte betätigbare Verstellspindeln vorgesehen sind.

22. Kit nach einem der Ansprüche 1 bis 21, **dadurch gekennzeichnet, dass** der Hubeinrichtung (44) eine das Drehen (Y) des angehobenen Stelzenfahrzeugs relativ zum Anhänger (43) um eine vertikale Achse (Z) ermöglichende Dreh-Ausgleichsanordnung (48) zugeordnet ist.

23. Kit nach einem der Ansprüche 1 bis 22, **dadurch gekennzeichnet, dass** der Hubeinrichtung (44) eine das seitliche Verschieben (X) des angehobenen Stelzenfahrzeugs relativ zum Anhänger (43) ermöglichende Schiebe-Ausgleichsanordnung (47) zugeordnet ist.

24. Verfahren zum Aufladen des Stelzenfahrzeugs eines Kits nach einem der Ansprüche 1 bis 22 auf den Anhänger (43) des betreffenden Kits, mit den folgenden Schritten:
- Das auf große Spurweite und große Bodenfreiheit eingestellte Stelzenfahrzeug fährt über den Anhänger (43) oder der Anhänger (43) fährt unter das auf große Spurweite und große Bodenfreiheit eingestellte Stelzenfahrzeug, so dass die Ladefläche (42) des Anhängers (43) zwischen den beiden Spuren des Stelzenfahrzeugs liegt.
- Mittels der Hubeinrichtung (44) wird das Stelzenfahrzeug unterstützt, so dass die Räder (10) entlastet werden.
- Anschließend werden die Stelzenstrukturen (12) verkürzt, indem die Sekundärteile (20) der Stelzenstrukturen (12) relativ zu deren Primärteilen (19) verstellt werden.
- Das Stelzenfahrzeug wird auf eine solche Höhe gebracht, dass seine Räder (10) sich auf einem über dem Niveau der Ladefläche (42) des Anhängers (43) liegenden Niveau befinden.
- Sodann werden die Endstücke (14) der vorderen und der hinteren Traversenstruktur (11) so weit nach innen, zur Fahrzeugmitte des Stelzenfahrzeugs hin verstellt, bis sich dessen Räder (10) oberhalb der Ladefläche (42) des Anhängers (43) befinden.
- Anschließend wird das auf geringe Spurweite und geringe Bodenfreiheit eingestellte Stelzenfahrzeug mittels der Hubeinrichtung (44) abgesenkt, bis es auf der Ladefläche (42) des Anhängers (43) aufsteht.

25. Verfahren nach Anspruch 24, **dadurch gekennzeichnet, dass** das Stelzenfahrzeug mittels der Hubeinrichtung (44) beim Verkürzen der Stelzenstrukturen (12) abgesenkt und anschließend wieder angehoben wird.

## Claims

1. A kit, comprising a self-propelled two-track stilt vehicle, especially for agricultural and forestry applications, and a trailer (43) used to transport the stilt vehicle and having a cargo bed (42), with the following features:
- The stilt vehicle comprises a running and carrying structure (1) provided with four wheels (10.1, 10.2) and having a front transverse structure (11.1) oriented transversely relative to the travel direction (A) and a rear transverse structure (11.2) oriented transversely relative to the travel direction;
- two front stilt structures (12.1) are disposed on both sides at the end of the front transverse structure (11.1) and two rear stilt structures (12.2) are disposed on both sides at the end of the rear transverse structure (11.2);
- wheel-carrying units (8, 9) that carry respectively at least one wheel (10.1, 10.2) are disposed on the stilt structures (12.1, 12.2);
- the front and rear transverse structures (11.1, 11.2) are respectively constructed in multiple parts having a middle piece (13) and a left and right end piece (14), which can be fixed thereon in various width positions and to which the respective associated stilt structure (12.1, 12.2) is connected;
- the stilt structures (12.1, 12.2) are respectively constructed in multiple parts having a primary part (19) connected to the associated end piece (14) of the transverse structure (11.1, 11.2) in question and a second part (20), which can be fixed thereon in various height positions and on which the associated wheel-carrying unit (8, 9) is disposed; **characterized by**:
- no positioning drives are provided that bring about a change of position of the secondary parts (20) and of the primary parts (19) of the stilt structures (12.1, 12.2) of the stilt vehicle relative to one another;
- a lifting device (44), braced on the trailer (43), is provided that acts on central elements of the running and carrying structure (1) of the stilt vehicle.

2. A kit according to claim 1, **characterized in that**, in the stilt vehicle, the end pieces (14) and the middle pieces (13) of the transverse structures (11.1, 11.2) as well as the secondary parts (20) and the primary parts (19) of the stilt structures (12.1, 12.2) can be fixed to one another by means of clamped connections (18, 27).

3. A kit according to claim 1 or claim 2, **characterized in that**, in the stilt vehicle, the middle pieces (13) of the transverse structures (11.1, 11.2) are constructed in the manner of frames with two transverse spars (15), which are joined to one another via longitudinal spars (16).

4. A kit according to claim 3, **characterized in that** the transverse spars (15) of the transverse structures (11.1, 11.2) and their end pieces (14) are formed from standard elements having same profile cross section, especially from standard profile pipes having same profile cross section.

5. A kit according to one of claims 1 to 4, **characterized in that**, in the stilt vehicle, the secondary parts (20) of the stilt structures (12.1, 12.2) are constructed in the manner of frames having two vertical spars (24), which are joined to one another via horizontal spars (25).

6. A kit according to claim 5, **characterized in that** the vertical spars (24) of the secondary parts (20) of the stilt structures (12.1, 12.2) and their primary parts (19) are formed from standard elements having same profile cross section, especially from standard profile pipes having same profile cross section.

7. A kit according to one of claims 1 to 6, **characterized in that**, in the stilt vehicle, the middle pieces (13) of the two transverse structures (11.1, 11.2) are joined to one another via longitudinal beams (28).

8. A kit according to claim 7, **characterized in that** the longitudinal beams (28) are part of a main frame (29) and are joined to one another via transverse beams (33) .

9. A kit according to claims 3 and 8, **characterized in that** the transverse beams (33) of the main frame (29) and transverse spars (15) of the transverse structures (11.1, 11.2) are formed from standard elements having same profile cross section, especially from standard profile pipes having same profile cross section, wherein respectively one transverse beam (33) of the main frame (29) is joined to a transverse spar (15) of the transverse structure (11.1, 11.2) in question.

10. A kit according to one of claims 1 to 9, **characterized in that**, in the stilt vehicle, two driven wheels (10.2) and two steerable wheels (10.1) are provided.

11. A kit according to claim 10, **characterized in that** an electrical steering mechanism (35) is integrated in the wheel-carrying units (8) in question of the steerable wheels (10.1).

12. A kit according to claim 10 or claim 11, **characterized in that** an electrical drive motor (39) is integrated in the wheel-carrying unit (9) in question of the driven wheels (10.2).

13. A kit according to one of claims 1 to 12, **characterized in that** in the stilt vehicle, the transverse structures (11.1, 11.2) and the stilt structures (12.1, 12.2) as well as a main frame (29) are constructed from light-metal profile elements.

14. A kit according to one of claims 1 to 13, **characterized in that**, in the stilt vehicle, no kind of positioning drives are provided that cause a change of position of the end pieces (14) and the middle pieces (13) of the transverse structures (11.1, 11.2) relative to one another.

15. A kit according to claim 14, **characterized in that** positioning spindles that can be actuated by external appliances are provided that are used for adjustment of the track width.

16. A kit according to one of claims 1 to 13, **characterized in that**, in the stilt vehicle, positioning drives, especially electrical linear positioning drives, are provided that cause a change of position of the end pieces (14) and of the middle pieces (13) of the transverse structures (11.1, 11.2) relative to one another.

17. A kit according to one of claims 1 to 16, **characterized in that** the lifting device (44) is a fixed, integral component of the trailer (43).

18. A kit according to one of claims 1 to 17, **characterized in that**, in the stilt vehicle, a driver's cab (2) is constructed on a main frame (29).

19. A kit according to one of claims 1 to 18, **characterized in that**, in the stilt vehicle, a working mechanism (3) is constructed on a main frame (29) .

20. A kit according to claim 19, **characterized in that** the working mechanism (3) is a spreading mechanism (4) for spreading pest-control agents.

21. A kit according to one of claims 1 to 20, **characterized in that** positioning spindles used for the change of position of the secondary parts (20) and of the primary parts (19) of the stilt structures (12.1, 12.2) of the stilt vehicle relative to one another are provided that can be actuated manually or if necessary using external appliances.

22. A kit according to one of claims 1 to 21, **characterized in that** a rotation-compensating arrangement (48) that permits rotation (Y), around a vertical axis (Z), of the raised stilt vehicle relative to the trailer (43), is associated with the lifting device (44).

23. A kit according to one of claims 1 to 22, **characterized in that** a shift-compensating arrangement (47) that permits lateral shifting (X), of the raised stilt vehicle relative to the trailer (43) is associated with the lifting device (44).

24. A method for loading the stilt vehicle of a kit according to one of claims 1 to 22 onto the trailer (43) of the kit in question, with the following steps:
- The stilt vehicle adjusted to large track width and large ground clearance travels over the trailer (43) or the trailer (43) travels under the stilt vehicle adjusted to large track width and large round clearance, so that the cargo bed (42) of the trailer (43) is situated between the two tracks of the stilt vehicle.
- The stilt vehicle is supported by means of the lifting device (44), so that the wheels (10) are unburdened.
- Then the stilt structures (12) are shortened by repositioning the secondary parts (20) of the stilt structures (12) relative to their primary parts (19) .
- The stilt vehicle is brought to such a height that its wheels (10) are located at a level situated above the level of the cargo bed (42) of the trailer (43).
- Then the end pieces (14) of the front and rear transverse structures (11) are re-positioned so far inwardly, toward the vehicle middle of the stilt vehicle, that its wheels (10) are situated above the cargo bed (42) of the trailer (43).
- Then the stilt vehicle adjusted to small track width and small ground clearance is lowered by means of the lifting device (44) until it stands upright on the cargo bed (42) of the trailer (43).

25. A method according to claim 24, **characterized in that** the stilt vehicle is lowered by means of the lifting device (44) for shortening of the stilt structures (12) and is then raised again.

## Revendications

1. Kit comprenant un véhicule enjambeur automoteur à deux voies, en particulier pour des applications agricoles et forestières, et une remorque (43) comportant une surface de chargement (42), servant au transport du véhicule enjambeur, dans lequel :
- le véhicule enjambeur comporte une structure de transport et de support (1) présentant quatre roues (10.1, 10.2), avec une structure de traverse avant (11.1) orientée transversalement à la direction de déplacement (A) et une structure de traverse arrière (11.2) orientée transversalement à la direction de déplacement,
- deux structures de jambage avant (12.1) sont disposées des deux côtés côté extrémité sur la structure de traverse avant (11.1) et deux structures de jambage arrière (12.2) disposées des deux côtés côté extrémité sur la structure de traverse arrière (11.2),
- des unités de support de roue (8, 9) portant respectivement au moins une roue (10.1, 10.2) sont disposées sur les structures de jambage (12.1, 12.2),
- les structures de traverse avant et arrière (11.1, 11.2) sont respectivement construites en plusieurs parties avec une pièce centrale (13) et une pièce terminale gauche et droite (14) apte à être fixée sur celle-ci dans différentes positions de largeur, à laquelle est reliée la structure de jambage (12.1, 12.2) respectivement correspondante,
- les structures de jambage (12.1, 12.2) sont respectivement construites en plusieurs parties avec une partie primaire (19) reliée à la pièce terminale (14) correspondante de la structure de traverse (11.1, 11.2) concernée, et une partie secondaire (20) apte à être fixée sur celle-ci dans différentes positions de hauteur, sur laquelle est disposée l'unité de support de roues (8, 9) correspondante,
**caractérisé en ce que**
- il n'est prévu aucun entraînement de réglage provoquant une modification de position des pièces secondaires (20) et des parties primaires (19) des structures de jambage (12.1, 12.2) du véhicule enjambeur les unes par rapport aux autres, et
- **en ce qu'**il est prévu un dispositif de levage (44) s'appuyant sur la remorque (43) et agissant sur des éléments centraux de la structure de transport et de support (1) du véhicule enjambeur.

2. Kit selon la revendication 1, **caractérisé en ce que** dans le véhicule enjambeur, les pièces terminales (14) et les pièces centrales (13) des structures de traverse (11.1, 11.2) ainsi que les parties secondaires (20) et les parties primaires (19) des structures de jambage (12.1, 12.2) peuvent être fixées les unes par rapport aux autres au moyen d'assemblages par serrage (18, 27).

3. Kit selon la revendication 1 ou la revendication 2, **caractérisé en ce que** dans le véhicule enjambeur, les pièces centrales (13) des structures de traverse (11.1, 11.2) sont construites comme des cadres avec deux longerons transversaux (15) reliés entre eux par des longerons longitudinaux (16).

4. Kit selon la revendication 3, **caractérisé en ce que** les longerons transversaux (15) des structures de traverse (11.1, 11.2) et les pièces terminales (14) de celles-ci sont constitués d'éléments standard avec une section transversale concordante, en particulier de tubes profilés standard avec une section transversale profilée concordante.

5. Kit selon l'une des revendications 1 à 4, **caractérisé en ce que** dans le véhicule enjambeur, les parties secondaires (20) des structures de jambage (12.1, 12.2) sont construites comme un cadre avec deux longerons verticaux (24) reliés entre eux par des longerons horizontaux (25).

6. Kit selon la revendication 5, **caractérisé en ce que** les longerons verticaux (24) des parties secondaires (20) des structures de jambage (12.1, 12.2) et les parties primaires (19) de celles-ci sont constitués d'éléments standard avec une section transversale concordante, en particulier de tubes profilés standard avec une section transversale profilée concordante.

7. Kit selon l'une des revendications 1 à 6, **caractérisé en ce que** dans le véhicule enjambeur, les pièces centrales (13) des deux structures de traverse (11.1, 11.2) sont reliées entre elles par des supports longitudinaux (28).

8. Kit selon la revendication 7, **caractérisé en ce que** les supports longitudinaux (28) font partie d'un cadre principal (29) et reliés entre eux par des supports transversaux (33).

9. Kit selon les revendications 3 et 8, **caractérisé en ce que** les supports transversaux (33) du cadre principal (29) et les longerons transversaux (15) des structures de traverse (11.1, 11.2) sont constitués d'éléments standard avec une section transversale concordante, en particulier de tubes profilés standard avec une section transversale concordante, un support transversal (33) du cadre principal (29) étant respectivement relié à un longeron transversal (15) de la structure de traverse (11.1, 11.2) concernée.

10. Kit selon l'une des revendications 1 à 9, **caractérisé en ce que** dans le véhicule enjambeur, il est prévu deux roues entraînées (10.2) et deux roues orientables (10.1).

11. Kit selon la revendication 10, **caractérisé en ce que** dans les roues orientables (10.1), un mécanisme de direction (35) est intégré dans l'unité de support de roues (8) concernée.

12. Kit selon la revendication 10 ou la revendication 11, **caractérisé en ce que** dans les roues entraînées (10.2), un moteur d'entraînement électrique (39) est intégré dans l'unité de support de roues (9) concernée.

13. Kit selon l'une des revendications 1 à 12, **caractérisé en ce que** dans le véhicule enjambeur, les structures de traverse (11.1, 11.2) et les structures de jambage (12.1, 12.2) ainsi qu'un cadre principal (29) sont constitués d'éléments profilés en métal léger.

14. Kit selon l'une des revendications 1 à 13, **caractérisé en ce que** dans le véhicule enjambeur, il n'est prévu aucun entraînement de réglage provoquant une modification de position des pièces terminales (14) et des pièces centrales (13) des structures de traverse (11.1, 11.2) les unes par rapport aux autres.

15. Kit selon la revendication 14, **caractérisé en ce qu'**il est prévu des broches de réglage actionnables par des appareils externes, servant au réglage de la largeur de voie.

16. Kit selon l'une des revendications 1 à 13, **caractérisé en ce que** dans le véhicule enjambeur, il est prévu des entraînements de réglage provoquant une modification de position des pièces terminales (14) et des pièces centrales (13) des structures de traverse (11.1, 11.2) les unes par rapport aux autres, en particulier des entraînements de réglage linéaires électriques.

17. Kit selon l'une des revendications 1 à 16, **caractérisé en ce que** le dispositif de levage (44) est un composant fixe et intégral de la remorque (43).

18. Kit selon l'une des revendications 1 à 17, **caractérisé en ce que** dans le véhicule enjambeur, une cabine de conduite (2) est montée sur un cadre principal (29).

19. Kit selon l'une des revendications 1 à 18, **caractérisé en ce que** dans le véhicule enjambeur, un outil (3) est monté sur un cadre principal (29).

20. Kit selon la revendication 19, **caractérisé en ce que** l'outil (3) est un outil d'épandage (4) pour l'épandage de pesticides.

21. Kit selon l'une des revendications 1 à 20, **caractérisé en ce qu'**il est prévu des broches de réglage actionnables manuellement ou le cas échéant à l'aide d'appareils externes, servant à la modification de position des parties secondaires (20) et des parties primaires (19) des structures de jambage (12.1, 12.2) du véhicule enjambeur les unes par rapport aux autres.

22. Kit selon l'une des revendications 1 à 21, **caractérisé en ce qu'**un ensemble d'équilibrage de rotation (48) permettant la rotation (Y) du véhicule enjambeur surélevé par rapport à la remorque (43) autour d'un axe vertical (Z) est attribué au dispositif de levage (44) .

23. Kit selon l'une des revendications 1 à 22, **caractérisé en ce qu'**un ensemble d'équilibrage de déplacement (47) permettant le déplacement latéral (X) du véhicule enjambeur surélevé par rapport à la remorque (43) est attribué au dispositif de levage (44).

24. Procédé pour le chargement du véhicule enjambeur d'un kit selon l'une des revendications 1 à 22 sur la remorque (43) du kit concerné, comprenant les étapes suivantes :
- le véhicule enjambeur réglé sur une grande largeur de voie et une grande garde au sol se déplace au-dessus de la remorque (43) ou la remorque (43) se déplace sous le véhicule enjambeur réglé sur une grande largeur de voie et une grande garde au sol, de telle façon que la surface de chargement (42) de la remorque (43) s'étend entre les deux voies du véhicule enjambeur,
- le véhicule enjambeur est soutenu au moyen du dispositif de levage (44), de manière à alléger les roues (10),
- les structures de jambage (12) sont ensuite raccourcies, en réglant les parties secondaires (20) des structures de jambage (12) par rapport aux parties primaires (19) de celles-ci,
- le véhicule enjambeur est surélevé à une hauteur telle que ses roues (10) se trouvent à un niveau situé au-dessus du niveau de la surface de chargement (42) de la remorque (43),
- les pièces terminales (14) des structures de traverse avant et arrière (11) sont alors déplacées vers l'intérieur vers le centre du véhicule enjambeur jusqu'à ce que les roues (10) de celui-ci se trouvent au-dessus de la surface de chargement (42) de la remorque (43),
- puis le véhicule enjambeur réglé sur une petite largeur de voie et une petite garde au sol est abaissé au moyen du dispositif de levage (44), jusqu'à ce qu'il se pose sur la surface de chargement (42) de la remorque (43).

25. Procédé selon la revendication 24, **caractérisé en ce que** le véhicule enjambeur est abaissé au moyen du dispositif de levage (44) lors du raccourcissement des structures de jambage (12), puis de nouveau surélevé.
